(19) Europäisches Patentamt
European Patent Office
Office européen des brevets

(11) **EP 2 486 357 B1**

(12) **EUROPÄISCHE PATENTSCHRIFT**

(45) Veröffentlichungstag und Bekanntmachung des Hinweises auf die Patenterteilung:
**30.03.2016  Patentblatt 2016/13**

(21) Anmeldenummer: **10766257.9**

(22) Anmeldetag: **05.10.2010**

(51) Int Cl.:
*G01D 11/24* (2006.01)     *F28D 15/02* (2006.01)

(86) Internationale Anmeldenummer:
**PCT/EP2010/064807**

(87) Internationale Veröffentlichungsnummer:
**WO 2011/042421 (14.04.2011 Gazette 2011/15)**

(54) **KÜHLEINRICHTUNG FÜR EINEN BEI ERHÖHTER UMGEBUNGSTEMPERATUR EINSETZBAREN SENSOR**

COOLING DEVICE FOR A SENSOR WHICH CAN BE USED AT A HIGH AMBIENT TEMPERATURE

DISPOSITIF DE REFROIDISSEMENT POUR UN CAPTEUR APTE À ÊTRE UTILISÉ À UNE TEMPÉRATURE AMBIANTE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2009   DE 102009048248**

(43) Veröffentlichungstag der Anmeldung:
**15.08.2012   Patentblatt 2012/33**

(73) Patentinhaber: **Hartmann, Eva**
**71263 Weil der Stadt (DE)**

(72) Erfinder: **HARTMANN, Steven**
**71272 Renningen (DE)**

(74) Vertreter: **Wolf, Eckhard et al**
**Wolf Pfiz & Gauss**
**Patentanwälte**
**Hauptmannsreute 93**
**70193 Stuttgart (DE)**

(56) Entgegenhaltungen:
**EP-A2- 0 235 778          WO-A1-2005/121682**
**DE-A1- 2 720 118          DE-A1- 4 418 656**
**DE-U1-202008 014 236     FR-A1- 2 611 973**
**US-A- 2 917 642          US-A- 4 169 387**

**Beschreibung**

Die Erfindung betrifft eine Sensoranordnung mit einem Sensor und einer Kühleinrichtung, wobei der Sensor zur Erfassung einer physikalischen Größe, wie z. B. Weg, Winkel, Druck, Kraft, Farbe, Struktur bestimmt ist und seine Betriebstemperatur einen Schwellenwert TS nicht überschreiten darf, wobei der Sensor bei einer erhöhten Umgebungstemperatur $T_U > T_S$ einsetzbar sein soll, wobei der Sensor ein auf die physikalische Größe ansprechendes Sensorelement sowie ein das Sensorelement aufnehmendes, der Grundform nach rohrförmiges Sensorgehäuse umfasst, das die Wärmeübertragung von dem Sensor auf einen Kühlkörper der Kühleinrichtung vermittelt, wobei der Sensor am einen Ende eines aus wärmeleitendem Material bestehenden, der Grundform nach rohrförmigen Sensorträgers lösbar fixierbar ist, wobei das andere Ende des Sensorträgers thermisch an dem Kühlkörper angekoppelt ist, über welchen eine Wärmeabgabe an ein den Kühlkörper umgebendes oder diesen durchströmendes Kühlfluid erfolgt, wobei ein den Sensorträger umgebendes topfförmiges Schutzgehäuse vorgesehen ist, das sowohl einen mechanischen als auch einen thermischen Schutz vermittelt und das an seinem dem Sensorelement benachbarten Bodenbereich einen Fensterbereich hat, über den die zu erfassende physikalische Größe in Wechselwirkung mit dem Sensorelement gelangt, und wobei eine Wärmerohreinrichtung vorgesehen ist, mittels derer mindestens aus dem Fensterbereich des Schutzgehäuses Wärme abführbar ist. US 4169387 offenbart eine derartige Sensoranordnung.

Eine Kühleinrichtung für Sensoren ist durch die DE-10 2004 027 747 A1 bekannt. Diese bekannte Kühleinrichtung ist für vergleichsweise extreme Bedingungen gedacht, d.h. für einen Einsatz in der Stahlproduktion, wo Sensoren oftmals in unmittelbarer Nähe glühender Materialstränge zur Produktionsüberwachung einsetzbar sein müssen und demgemäß einem hohen Wärmestrom standhalten müssen.

Bei der bekannten Einrichtung ist zur Realisierung einer besonders effektiven Kühlfluidführung ein in engen Windungen schraubenförmig verlaufender Kühlfluidströmungspfad mittels einer aufwendigen Mehrschichttechnik des Gehäuseaufbaus realisiert, das aus durch Hartlöten gefügten, relativ dünnwandigen Metallplatten besteht, wobei das aktive Detektorelement vergleichsweise tief im Inneren des Gehäuses angeordnet ist, um eine hinreichende Kühlwirkung zu erzielen. Bedingt durch diese Anordnung des Detektorelements müssen in der Regel vergleichsweise große "Schaltabstände", d.h. Mindestabstände des Detektorelements von dem zu überwachenden Gegenstand hingenommen werden, was der Ansprech-Empfindlichkeit und Messgenauigkeit abträgig ist, d.h. erheblichen elektronischen Auswertungsaufwand bedingt, wenn eine definierte Genauigkeit bzw. Ansprechempfindlichkeit gewährleistet sein soll.

Die bekannte Einrichtung ist für ein Sensorelement eines allgemein bekannten induktiven Sensors gedacht, der als Abstandssensor verwendbar ist und im Wesentlichen in der Art eines bedämpften Schwingkreises arbeitet, der durch das Objekt, dessen Position erfasst bzw. überwacht werden soll, bedämpfbar ist, woraus in gängiger Weise ein elektrisches Nutzsignal ableitbar ist, das ein Maß für die überwachte physikalische Größe ist.

Dieser typische Anwendungsfall wird, ohne Beschränkung der Allgemeinheit, der Einfachheit halber auch nachfolgenden Erläuterungen zugrundegelegt werden.

Sowohl bei der Kühleinrichtung gemäß der DE-10 2006 052 241 A1 als auch bei der Kühleinrichtung gemäß der FR-2 749 651 A1, die für vergleichbare Typen von Sensoren geeignet sind, ist ein Kühlmittel-Leitungssystem mit im Wesentlichen schraubenförmig verlaufenden Strömungspfaden bzw. -rohren vorgesehen, das den zu kühlenden Sensor auf mindestens dessen axialer Länge umschließt und vorzugsweise über seine Enden in axialer Richtung hinausragt; die Folge hiervon ist eine relativ großvolumige und daher auch mit einer vergleichsweise großen Oberfläche behaftete Gestaltung der Kühleinrichtung im Bereich des Sensors, dies wiederum mit der Folge, dass eine entsprechend große Wärmekontaktfläche mit dem unter relativ hoher Temperatur stehenden Untersuchungsbereich gegeben ist und den hieraus resultierenden Beschränkungen für einen Einsatz von Kühleinrichtungen wie durch die erwähnten Publikationen bekannt.

Sinngemäß gilt dies unter dem Gesichtspunkt ungünstig großer Lateraldimensionen auch für eine zum Schutz eines Stabendoskops für technische Zwecke dienende Kühleinrichtung gemäß der DE-10 1006 052 241 A1, bei der zum Zweck der Kühlung eines aus Stablinsen gebildeten, insgesamt stabförmigem Endoskop konzentrische Ringräume vorhanden sind, wobei das Endoskop einen zentralen Ringraum durchsetzt, der seinerseits von einem Ringraum umschlossen ist, durch den zu Beleuchtungszwecken vorgesehene Bündel optischer Fasern geführt sind. Die bekannten Kühleinrichtungen sind, je nach Konstruktion mehr oder weniger ausgeprägt, mit dem Nachteil behaftet, dass vergleichsweise große Wärmeströme abgeführt werden müssen, um die Temperatur der jeweiligen Sensoren bzw. Überwachungsgeräte unterhalb kritischer Schwellenwerte zu halten.

Weiterhin ist eine gattungsgemäße Sensoreinrichtung aus der US-4169387A bekannt. Diese Sensoreinrichtung verfügt jedoch weder über eine Wärmeleitschicht im Bodenbereich, die zwischen dem Sensorelement und dem zu überwachenden, eine erhöhte Temperatur aufweisenden Objekt angeordnet und thermisch mit dem Sensorträger verbunden ist, noch weist das dortige Schutzgehäuse ein Wärmeisolationssystem auf, das ein äußeres topfförmiges Isolationselement, ein koaxial dazu angeordnetes, eine Aufnahme für das Sensorelement aufweisendes inneres topfförmiges Isolationselement sowie mindestens eine auf der Innenseite des Schutzgehäuses angeordnete Isolierschicht aus wärmedämmenden Material umfasst.

Davon ausgehend besteht die Aufgabe der Erfindung darin, das Sensorelement von der Wärme im äußeren Umfeld der Sensoranordnung zu schützen.

Zur Lösung dieser Aufgabe werden die in dem Patentanspruch 1 angegebenen Merkmalskombination vorgeschlagen. Vorteilhafte Weiterbildungen und Ausgestaltungen der Erfindung ergeben sich aus den abhängigen Ansprüchen.

Gemäß der Erfindung weist das Schutzgehäuse ein Wärmeisolationssystem auf, das ein äußeres topfförmiges Isolationselement, ein koaxial dazu angeordnetes, eine Aufnahme für das Sensorelement aufweisendes inneres topfförmiges Isolationselement sowie mindestens eine auf der Innenseite des Schutzgehäuses angeordnete Isolierschicht aus wärmedämmendem Material umfasst, und für das innere Isolationselement wird ein Festkörperteil aus Alunit® verwendet.

In bevorzugter Ausgestaltung der Erfindung besteht das äußere Isolationselement des Schutzgehäuses aus Keramikmaterial, insbesondere aus Aluminiumoxid oder Zirkonoxid oder aus einem hochtemperaturfesten Kunststoff, wie PEEK. Die Isolierschicht kann ein Keramikvlies aufweisen. Vorteilhaft besteht eine der Isolationsmaterialschichten aus Microtherm®-Super A-Material.

Dieses Schutzgehäuse erstreckt sich über mindestens die gesamte Länge des Sensorträgers, der eine mechanische Verlängerung des Sensorgehäuses zum Kühlkörper hin bildet und so ausgelegt ist, dass eine hinreichende Wärmeabfuhr zum Kühlkörper hin gewährleistet ist, d.h. der Wärmewiderstand der Wärmetransportstrecke Sensor-Kühlkörper klein gegen den Wärmewiderstand der Wärmetransportstrecke Schutzgehäuse-Sensor bleibt.

In bevorzugter Gestaltung der Sensoranordnung ist der Sensorträger als Metallrohr mit einem Innengewinde ausgebildet, in das zur lösbaren Fixierung der Sensor einschraubbar ist. Diese Gestaltung der Sensoranordnung ermöglicht im Bedarfsfall auf einfache Weise den Ersatz des Sensors oder einen Tausch mit einem Sensor anderer Art, sofern die Sensorgehäuse in ihren mechanischen Abmessungen übereinstimmen.

Im Hinblick auf eine kühlungstechnisch günstige Auslegung der Sensoranordnung ist es besonders günstig, wenn der Sensorträger auf das Schutzgehäuse und dessen Isolationsschicht dahingehend abgestimmt ist, dass sein wirksamer Wärmewiderstand sehr viel kleiner ist als der wirksame Wärmewiderstand der Isolationsschicht des Schutzgehäuses.

Des weiteren ist im Hinblick auf eine optimierte Kühlwirkung bei vergleichsweise geringem Wärmestrom vorgesehen, dass zur Wärmekopplung des Sensorträgers und des Kühlkörpers eine Wärmerohr-Anordnung vorgesehen ist, die eine besonders rasche Abfuhr von Wärme zum Kühlkörper hin ermöglicht, wobei hierbei eingesetzte Wärmerohre vorzugsweise solche mit kapillarem Rückfluss des Arbeitsmediums sind, damit die Funktion des Wärmetransports unabhängig von der räumlichen Orientierung des jeweiligen Wärmerohres ist.

Wenn die Wärmerohranordnung mehrere der äußeren Form nach stabförmige Wärmerohre umfasst, die bezüglich der zentralen Längsachse der Sensoranordnung azimutal äquidistant angeordnet sind, wobei die Wärmerohre mit ihren Verdampferzonen über eine aus thermisch gut leitendem Material bestehende, im Wesentlichen ringförmige Kontaktkörperanordnung mit dem Sensorträger in thermischem Kontakt stehen und mit ihren Kondensationszonen in thermischem Kontakt mit dem Kühlkörper der Sensoranordnung gehalten sind, so ist besonders zweckmäßig, wenn der insgesamt ringförmige Kontaktkörper in mehrere Bereiche, vorzugsweise gleicher azimutaler Ausdehnung unterteilt ist, wobei dieses Sektorbereiche über jeweils mindestens ein Wärmerohr mechanisch und wärmeleitend mit dem Kühlkörper verbunden und durch Federwirkung in großflächiger Anlage mit dem Sensorträger gehalten sind, so dass ein guter Wärmekontakt gegeben ist. Hierfür besonders geeignet ist es, wenn die Wärmerohre mindestens im Bereich ihrer Verdampfungszonen einen flach gewölbten, nierenförmigen oder ringsektorförmigen Querschnitt haben, der eine großflächige Anlage der Verdampfungszonen an dem Sensorträger ermöglicht, in radialer Richtung jedoch weniger auftragend wirkt als ein kreisrunder Querschnitt und Raum für Halteelemente lässt.

Dieser innige Kontakt kann in vorteilhafter Gestaltung dadurch optimiert sein, dass die Sektorelemente des Kontaktkörpers mittels eines oder mehrerer federelastischer Spannelemente an die Außenfläche des zylindermantelförmigen Wandbereiches des Sensorträgers andrückbar sind, die, in Umfangsrichtung des Sensorträgers gesehen, einen gleichmäßig guten Wärmekontakt der Wärmerohre mit dem Sensorträger und auch mit dem Kühlkörper ermöglichen.

Alternativ zu einer mehrere diskrete "lineare" Wärmerohre umfassenden Anordnung kann es auch besonders vorteilhaft sein, wenn ein einziges zylindermantelförmig gestaltetes Wärmerohr vorgesehen ist, das den Sensorträger, abgesehen von einem schmalen, parallel zur zentralen Achse der Anordnung verlaufenden Spalt vollständig umschließt und mittels eines unter zentripetaler Vorspannung stehenden Spannelements an die äußere Zylindermantelfläche des Sensorträgers großflächig andrückbar ist, wobei es besonders zweckmäßig ist, wenn als Spannelement eine mindestens zwei jeweils 360° vollständig umschließende Windungen umfassende Schraubenfeder vorgesehen ist, die sowohl einfach herstellbar als auch einfach montierbar ist.

Alternativ zu einer derartigen, eine im Wesentlichen linienförmige Anlage des Spannelements an den Wärmerohren vermittelnde Gestaltung desselben kann auch ein Spannelement in der Art einer die Wärmerohranordnung außenseitig umschließende, rohrförmig mit Längsspalt ausgebildete Spange vorgesehen sein, die, geometrisch gesehen, eine Einhüllende der Wärmerohranordnung bildet.

Spannelemente der vorgenannten Gestaltungen können mit erheblichen Vorteilen sowohl für die präzise Vorgabe der Spannkräfte als auch für die Montage der Spannelemente aus einem mit Formgedächtnis behafteten Material gefertigt sein, das bei vergleichsweise niedrigen Temperaturen nachgiebig und leicht formbar ist und oberhalb einer kritischen Temperatur fest und federelastisch ist, wobei derartige Federelemente in der Weise herstellbar und benutzbar sind, dass eine eingeprägte Form bei erhöhter Temperatur einer guten Federwirkung entspricht und die Spannelemente unterhalb einer materialspezifischen Temperatur in eine "superelastische" Konsistenz gelangen, die eine einfache Montage der Spannelemente ermöglicht, die, sobald die kritische Temperatur überschritten ist, in die für die Spannwirkung erforderliche Form "zurück" gelangen.

Wenn das Schutzgehäuse aus Glas, Keramik oder einem temperaturbeständigen Kunststoff oder aus einem polierbaren Metall hinreichender Temperaturbeständigkeit, z. B. Edelstahl, besteht und mit einer Außenbeschichtung versehen ist, vorzugsweise einer Beschichtung aus Gold oder Chrom, die elektromagnetische Strahlung aus dem Spektralbereich der Umgebungswärmestrahlung reflektiert, ist auf einfache Weise ein aus der Umgebung zum Sensor abschließender Wärmestrom um einen reflektierten Anteil elektromagnetischer Strahlungsenergie reduzierbar.

Wenn das Schutzgehäuse aus einem Metall geringer elektrischer Leitfähigkeit, z. B. Titan gefertigt ist, lässt sich auf einfache Weise eine durch elektromagnetische Strahlung, die von dem Sensor selbst zu Messzwecken erzeugt wird, bedingte Entwicklung von Wirbelströmen und eine daraus resultierende Reduktion der Sensorempfindlichkeit vermeiden bzw. gering halten.

Wenn der Kühlkörper der Sensoranordnung mittels eines Kühlmediums, dessen Massenstrom einstellbar ist, auf eine definierte Temperatur - vorzugsweise geregelt - einstellbar ist, lässt sich in zahlreichen Anwendungsfällen eine messtechnisch günstige Erhöhung der Empfindlichkeit des Sensors erreichen und ein Betrieb desselben bei einer schonenden Betriebstemperatur gewährleisten.

Weitere Einzelheiten der erfindungsgemäßen Kühleinrichtung ergeben sich aus der nachfolgenden Beschreibung eines speziellen Ausführungsbeispiels anhand der Zeichnung. Es zeigen:

Fig.1    eine Gesamtansicht einer erfindungsgemäßen Kühleinrichtung teilweise im Schnitt längs einer die zentrale Längsachse der Einrichtung enthaltenden Ebene, mit einem einen Sensor mit einem Kühlkörper mechanisch fest und thermisch gut leitend verbindenden Sensorträger, die von einem Schnittgehäuse umgeben ist,

Fig. 2a    eine schematisch vereinfachte Darstellung der Einrichtung gemäß Fig. 1 zur Erläuterung der mechanischen und thermischen Kopplung des Sensors und des Kühlkörpers und dessen thermischer Isolation gegenüber der Umgebung,

Fig. 2b    ein Ersatzschaltbild zur Erläuterung der thermischen Widerstände und Wärmeleitungseigenschaften der Einrichtung gemäß den Fig. 1 und 2a,

Fig. 2c    das Schnittgehäuse und den Sensorträger der Kühleinrichtung in einem Schnitt längs der Linie IIc - lic der Fig. 2a zur Erläuterung spezieller Auslegungen der Kühleinrichtung,

Fig. 3a    eine Gestaltung des Sensorträgers mit unter Verwendung von Wärmerohren reduziertem Wärmewiderstand, in einer der Darstellung der Fig. 3b entsprechenden Schnittdarstellung,

Fig. 3b    eine weitere spezielle Gestaltung eines Sensorträgers mit zwischen Kontaktringen sich erstreckenden in azimutalem Abstand voneinander angeordneten äußerlich stabförmigen Wärmerohren, die parallel zur zentralen Achse der Kühleinrichtung verlaufen, in einer der Fig. 3c entsprechenden Ansichtsdarstellung,

Fig. 3c    den Sensorträger gemäß Fig. 4b im Schnitt längs der Linie IVc - IVc der Fig. 4b, und

Fig. 3d    ein zylindermantelförmiges Wärmerohr zur wärmeleitenden Verbindung des Sensors mit dem Kühlkörper, das seinerseits den Sensor rohrförmig umschließt und mittels kurzer federelastischer Elemente am Sensor und am Kühlkörper festlegbar ist,

Fig. 4a    eine Detaildarstellung der Anordnung des Sensors im Sensorträger, in einem vereinfachten, die zentrale Längsachse der Anordnung enthaltenden Schnitt,

Fig. 4b    einen Schnitt längs der Linie IIIb - IIIb der Fig. 3a zur Erläuterung einer Gestaltung des Trägerrohres mit sektorförmiger Gestaltung des Wärmekontaktbereichs des Trägerrohres;

Fig. 5    eine schematisch vereinfachte Gesamtansicht eines weiteren, für einen Hochtemperatureinsatz geeigneten Ausführungsbeispiels in einer der Fig. 1 entsprechenden Darstellung, etwa im Maßstab 1,6 : 1.

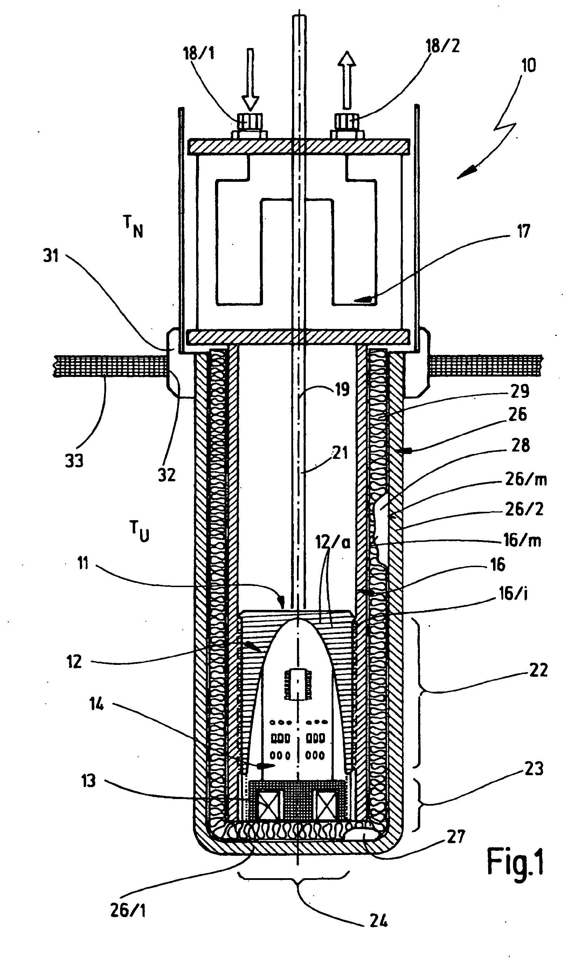

Die in der Fig. 1 insgesamt mit 10 bezeichnete Kühleinrichtung ist dafür gedacht, einen insgesamt mit 11 bezeichneten Sensor, z.B. einen induktiven Sensor, der in einer Umgebung einsetzbar ist, in der eine erhöhte Umgebungstemperatur $T_U$ herrscht, z.B. eine Temperatur im Bereich zwischen 250 und 300 [°C], soweit zu kühlen, dass die unter Betriebsbedingungen sich einstellende "stationäre" Temperatur $T_S$, die der Sensor 11 im Betrieb annimmt, hinreichend niedrig gehalten werden kann, um Beschädigungen des Sensors 11 und mit diesem in thermischem Kontakt stehender weiterer Elemente ausschließen zu können.

Der Sensor 11 umfasst bei dem zur Erläuterung gewählten speziellen Ausführungsbeispiel gemäß Fig. 1 ein zylindrisch-rohrförmiges Sensorgehäuse 12 und als zur Erfassung der Messgröße, z.B. eines Abstandes, geeignetes Sensorelement 13, dargestellt ist eine magnetische Feldspule, sowie eine zu deren Ansteuerung dienende, schematisch angedeutete Steuer- und Versorgungseinheit 14, die in der aus der Fig. 1 ersichtlichen Anordnung innerhalb des rohrförmigen Sensorgehäuses 12 angeordnet und in diesem geschützt untergebracht sind.

Der Sensor 11 ist innerhalb eines langgestreckt rohrförmig dargestellten Sensorträgers 16 angeordnet, der die wärmetechnisch gut leitende und mechanisch lösbar feste Verbindung mit einem insgesamt mit 17 bezeichneten, von dem Sensorelement 13 entfernt angeordneten Kühler vermittelt, der zur Abführung der Wärme aus der Kühleinrichtung 10 dient, sei es in der Art eines "aktiven" Kühlers, der von einem Kühlfluid durchströmt wird, das die vom kühl zu haltenden Objekt - her abgeleitete Wärme aufnimmt und seinerseits zur Regeneration einem entfernt angeordneten, nicht dargestellten Kühlsystem zugeleitet werden kann, aus dem wiederum Kühlfluid dem Kühler 17 zugeführt wird. Diesbezügliche Anschlussstutzen für die Kühlmittelzufuhr und den Kühlmittelabfluss sind mit 18/1 und 18/2 bezeichnet.

Abgesehen von der Anordnung der beiden Anschlussstutzen 18/1 und 18/2 ist die Kühleinrichtung 10 im Wesentlichen rotationssymmetrisch bezüglich ihrer zentralen Längsachse 19 ausgebildet, entlang derer das Versorgungs- und Steuerkabel 21 verläuft, das durch einen zentralen Kanal des Kühlkörpers hindurchtritt und der elektrischen Versorgung des Sensors sowie der Ausleitung von Sensor-Ausgangssignalen dient.

Zum Zweck der lösbar festen Verbindung des Sensors 11 mit dem Sensorträger 16 ist das Sensorgehäuse 12 mit einem Außengewinde 12/a versehen, das mit einem zugeordneten Innengewinde 16/i des Sensorträgers 16 in kämmendem Eingriff steht, wobei durch diesen Gewindeeingriff die axiale Ausdehnung einer schematisch angedeuteten (Wärme-) Kontaktregion 22 bestimmt ist, innerhalb derer ein Wärmestrom vom Sensor 12 zum Sensorträger 16 übertreten und durch diesen zum Kühlkörper 17 strömen kann. Bei dem zur Erläuterung gewählten speziellen Ausführungsbeispiel beträgt die axiale Ausdehnung der Kontaktregion 22 etwa das Vierfache der Kopfregion 23 des Sensorgehäuses 12, die das Sensorelement 13 radial außen umschließt, und den Rand einer Fensterregion 24 markiert, innerhalb derer z.B. vom Sensorelement 13 ausgehende HF-Strahlung zum Untersuchungsobjekt hin aus der den Sensor enthaltenden Kühleinrichtung 10 austreten kann.

Der den Sensorträger 16 und den Sensor 11 selbst umfassende Teil der Kühleinrichtung ist von einem insgesamt mit 26 bezeichneten Schutzgehäuse aufgenommen, das in koaxialer Anordnung mit dem Sensorträger 16 einen ringspaltförmigen Zwischenraum 28 in radialer Richtung begrenzt und in der Fensterregion 24 durch seinen Bodenbereich 26/1, der mit glatter Wölbung an den rohrförmigen Mantelbereich 26/2 des Schutzgehäuses 26 anschließt und zwischen der Kopfregion 23 des Sensors und der diesem zugewandten Seite des Bodens 26/1 des Schutzgehäuses 26 einen Spalt 27 begrenzt, dessen axiale Weite der radialen Weite des Ringspaltes 28 entspricht, der durch die radial äußere Mantelfläche 16/m des Sensorträgers 16 sowie die radial innere Mantelfläche 26/m des rohrförmig zylindrischen Bereiches des Schutzgehäuses 26 berandet ist.

Der durch die rohrförmigen Bereiche des Sensorträgers 16, einerseits und des Schutzgehäuses 26, andererseits berandete Ringspalt 28 sowie der mit diesem kommunizierende Spalt 27 zwischen dem Bodenbereich 26/1 des Schutzgehäuses 26 und dem diesem zugewandten Stirnende des Sensorträgers 16 und des Sensorelements 13 selbst sind mit einer Isoliermaterialschicht 29 ausgefüllt, z.B. Keramikfaserwolle verfüllt, die zu einem hohen Wärmewiderstand führt, der sehr viel größer ist der Wärmewiderstand des im wesentlichen rohrförmigen Sensorträgers 16, über den Wärme aus dem Sensorbereich zum Kühlkörper 17 abfließen muss, um die Temperatur im Sensorbereich hinreichend niedrig zu halten.

Die Kühleinrichtung 10 ist, wie in der Fig. 1 lediglich durch einen Montagering 31 angedeutet, in einer diesen aufnehmenden kreisrunden Öffnung 32 einer Wand 33 gehalten, welche einen Bereich erhöhter Umgebungstemperatur $T_U$ gegen eine Bereich "normaler" Temperatur $T_N$ abgrenzt, in dem sich der Kühlkörper 17 befindet, während der von dem Schutzgehäuse 26 umschlossene Teil der Kühleinrichtung, der den Sensorträger 16 und die Isolationsschicht 29 umfasst, praktisch vollständig innerhalb des Bereiches angeordnet ist, in dem die erhöhte Temperatur $T_U$ herrscht.

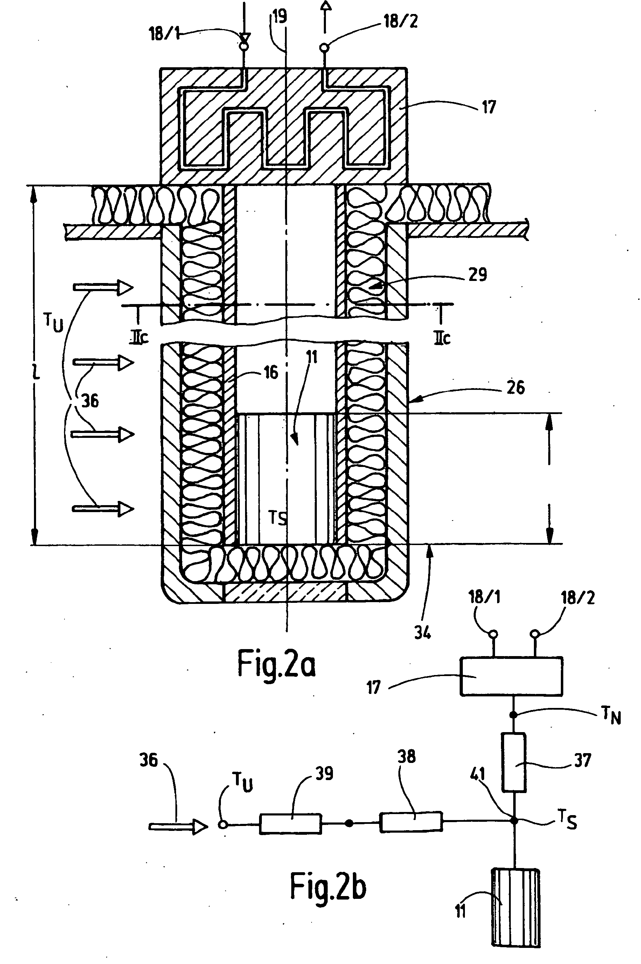

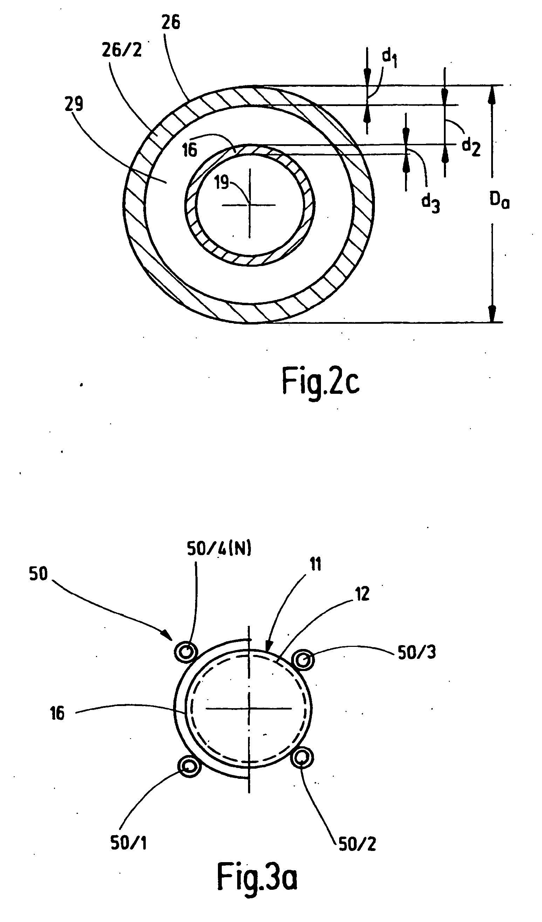

Zur Erläuterung der Funktion der erfindungsgemäßen Kühleinrichtung 10 und möglicher Auslegungen derselben sei im Folgenden zunächst auf die Fig. 2a und 2b Bezug genommen, in denen für funktionsentsprechende Elemente jeweils dieselben Bezugszeichen angegeben sind wie in der Fig. 1.

Für die nachfolgende Erläuterung sei davon ausgegangen, dass der Sensor 11 in einem stationären Betriebszustand der Kühleinrichtung 10 eine Temperatur $T_S$ habe, die einem stabilen Wert zwischen der erhöhten Umgebungstemperatur T (von z.B. 250 [°C]) und der "Normal"-Temperatur $T_N$ (von z.B. 30 [°C]) entspricht, auf der der Kühlkörper 17, z.B. durch Kühlung mittels eines ihn durchströmenden Kühlfluids stabil gehalten wird.

Hierbei soll die Temperatur $T_S$ höchstens einem Betrag $T_{Smax}$ von z.B. 70 [°C] entsprechen, oberhalb dessen eine Beschädigung des Sensors 11 zu besorgen wäre.

Um dieser Förderung zu genügen, ist eine Auslegung einer Kühleinrichtung 10, wie anhand der Fig. 1 dem grundsätzlichen Aufbau nach erläutert, in spezieller Auslegung, zu deren Erläuterung nunmehr auch auf die Fig. 2a bis 2c Bezug genommen sei, mehr im Einzelnen wie folgt gestaltet:

Der thermisch gut leitend unmittelbar an den Kühlkörper 17 angesetzte, mit diesem fest oder lösbar fest verbundene, rohrförmige Sensorträger 16, dessen dem Kühlkörper 17 abgewandter Endabschnitt den Sensor 11 auf dessen gesamter axialer Länge umschließt, derart, dass die dem Kühlkörper 17 abgewandte ringförmige Endstirnfläche des Trägerrohres und die entsprechende Endstirnfläche des Sensorgehäuses 12 in einer gemeinsamen Stimebene 34 liegen, sowie der zylindrische Mantelbereich 26/2 des Schutzgehäuses 26 und die zwischen dem zylindrischen Mantelbereich 26/2 des Schutzgehäuses und der äußeren Mantelfläche des Trägerrohres 16 angeordnete dickwandig rohrförmige Isoliermaterialschicht 29, welche den Ringspalt 28 zwischen dem Schutzgehäuse und dem Sensorträger 16 ausfüllt, haben, abgesehen von vernachlässigbaren Abweichungen, in axialer Richtung dieselbe effektive Länge I, für die ein Betrag von 120 mm angenommen sei.

Diese bezüglich der zentralen Achse 19 koaxial angeordneten Elemente der Kühleinrichtung 10 sind in dem Bereich der erhöhten Umgebungstemperatur Tu einem durch die Pfeile 36 schematisch repräsentierten Wärmestrom ausgesetzt, der in einem bezüglich der zentralen Längsachse 19 symmetrischen Strömungsverlauf von radial außen durch den Mantelbereich des Schutzgehäuses und die Isolationsschicht 29 radial nach innen und sodann in axialer Richtung, d.h. parallel zur zentralen Längsachse 19 über den rohrförmigen Sensorträger 19 zum einen Teil zu dem Sensor 11 strömt, wodurch dieser erwärmt wird und zum anderen über den Sensorträger 16 zum Kühlkörper 17 fließt, der, wie schematisch angedeutet, als Flüssigkeitskühler ausgebildet ist, der, durchströmt von einem Kühlfluid, z.B. Wasser, auf einer konstanten Temperatur $T_N$ gehalten werden kann. Der Kühlkörper 17 wirkt dadurch als Wärmesenke, die auf konstanter Temperatur, von z.B. 30 [°C] gehalten werden kann.

Analog ist die auf erhöhter Temperatur $T_U$ von z.B. 250 [°C] befindliche Umgebung der Kühleinrichtung 10 als gleichsam unerschöpfliche Wärmequelle konstanter Temperatur anzusehen, die den zum Kühlkörper 17 fließenden Wärmestrom 36 speist, der in einem stationären Betriebszustand der Kühleinrichtung auch bewirkt, dass sich der Sensor 11 auf einer Betriebstemperatur $T_S$ befindet, die durch die Kühleinrichtung 10 so einstellbar sein muss, dass der Sensor F nicht belastet ist und eine hohe Standzeit erreichen kann.

Der Sensorträger 16 und die diesen koaxial umschließende und vollständig einhüllende Isolationsschicht 29 sowie der rohrförmige Mantelabschnitt des Schutzgehäuses sind in der Ersatzschaltbilddarstellung der Fig. 2b durch ihre Wärmewiderstände 37,38,39 repräsentiert, die allgemein durch die Beziehung

$$R_T = \frac{l}{\lambda} \cdot A \qquad\qquad (1)$$

gegeben wird, in der mit $\lambda$ die spezifische Wärmeleitfähigkeit des Materials bezeichnet ist, aus dem der Körper besteht, über den Wärme strömt, mit A die Querschnittsfläche des durchströmten Körpers und mit I dessen Länge, d.h. die Länge des Strömungspfades, über den die Wärme strömt, wobei $\lambda$ ein materialspezifischer Wert der Dimension [W]/[m][°K] ist.

Mit den in der nachfolgenden Tabelle angegebenen $\lambda$-, I- und A- Werten für das aus Keramik-Material bestehende Schutzgehäuse 26 (Spalte 1), die Isolationsschicht 29 aus Keramikfasermaterial (Spalte 2) und den Sensorträger 16 (Spalte 3) ergeben sich für deren thermische Widerstände die in der letzten Zeile dieser Tabelle angegebenen Werte, die, gemäß dem Ersatzschaltbild der Fig. 2b, gemäß welcher diese thermischen Widerstände in Reihe geschaltet sind, für das der Erläuterung zugrunde gelegte Auslegungsbeispiel einen Gesamtwiderstand $R_{thges}$ von 10,31 °K/W ergeben.

| | Schutzgehäuse (Keramik) | Isolierschicht (Keramikfasermaterial) | Sensorträger (Kupfer) |
|---|---|---|---|
| $\lambda \frac{[W]}{[m][°K]}$ | $\approx 1$ | 0,05 | 350 |
| I [m] | 0.003 (3 mm) | 0,006 (6 mm) | 0,06 (60 mm) |
| A [m²] | 0,0177 A = π 47·120 [mm²] | 0,0143 $A_L$ = π· 38·120 [mm²] | 0,0000974 A = π· 31.1 [mm²] |

(fortgesetzt)

|  | Schutzgehäuse (Keramik) | Isolierschicht (Keramikfasermaterial) | Sensorträger (Kupfer) |
|---|---|---|---|
| $R_{th} \dfrac{[°K]}{[W]}$ | 0,17 | 8,38 | 1,76 |
| $R_{thges} = (0{,}17 + 8{,}38 + 1{,}76)\ °K/W = 10{,}31\ [°K]/[W]$ | | | |

Es sei angemerkt, dass bei der Berechnung des Wärmewiderstandswertes für den rohrförmigen Sensorträger 16, für den als Material Kupfer vorausgesetzt ist, nur dessen halbe geometrische Länge von 0,06 m angesetzt worden ist, da entsprechend der Näherung, dass der durch die Pfeile 37,38,39 repräsentierte Wärmestrom durch einen einzigen, "mittig" dem Sensorträger zugeleitete "konzentrierte" Wärmestrom ersetzt werden kann und mithin - bei dieser Näherung - für den Wärmewiderstand desjenigen Teils des Sensorträgers, über den die Wärme vom Sensor 11 zum Kühlkörper 17 hin abströmt, nur die halbe Länge des Sensorträgers 16, gemessen zwischen dem Kühlkörper 17 und dem von diesem abgewandten Ende des Sensorträgers in Ansatz gebracht werden darf.

Mit dem vorgenannten Wert des Gesamt-Wärmewiderstandes $R_{thges}$ von 10,31 °K/W ergibt sich, wenn von einer Umgebungstemperatur $T_U$ von 250 °C und einer Kühlkörpertemperatur von 30 °C ausgegangen wird, gemäß der Beziehung

$$\dot{Q} = \frac{\Delta T}{R_{thges}} = \frac{220}{10{,}31}[W]$$

ein Wärmestrom $\dot{Q}$ von 21,34 W.

Mit diesem Betrag des Wärmestroms $\dot{Q}$ ergibt sich für die Temperatur $T_S$ die im stationären Zustand der Kühleinrichtung am Sensor 11, d.h. an der Mittelanzapfung 41 der die Isolationsschicht 29 und das Trägerrohr 16 repräsentierenden Widerstände 38,39 herrscht, die Beziehung

$$\frac{(T_s - 30)[°C]}{1{,}76[W]} = 21{,}34\frac{[°C]}{[W]} \qquad\qquad (2)$$

und für die Sensortemperatur unmittelbar der Wert ($T_S = 67{,}55[°C]$), der mit der Forderung, dass die Sensortemperatur $T_S$ einen Wert von 70 [°C] nicht überschreiten darf, "gerade noch" verträglich wäre; jedoch würde für den betrachteten Sensor schon ein Anstieg des Wärmestroms $\dot{Q}$ auf einen Wert von 23 °C zu einem Überschreiten der Zulässigkeitsgrenze von 70 [°C] führen, was, konstante Temperatur des Kühlkörpers 17 und konstante Werte der Wärmewiderstände 37,38,39 vorausgesetzt, bei einer Umgebungstemperatur $T_U$ von ca. 268 [°C] der Fall wäre, d.h. bei einer Erhöhung derselben um 18°.

Um den Sensor 11 in einem sicheren Temperaturbereich betreiben zu können, d.h. bei einer Sensortemperatur $T_S$, die signifikant unterhalb der Zulässigkeitsgrenze von z.B. 70 [°C] liegt, ist bei den in den Fig. 3a - 3d dargestellten Varianten erfindungsgemäßer Kühleinrichtungen der Sensorträger 16 um eine insgesamt mit 50 bezeichnete Anordnung von Wärmerohren 50/1 bis 50/N ergänzt, deren Wirkung darin besteht, den Wärmewiderstand der Wärmeübertragungsstrecke zwischen dem Sensor 11 und dem Kühlkörper 17 erheblich, z.B. um etwa eine Größenordnung (Faktor 10) zu senken.

Derartige Wärmerohre arbeiten nach dem Prinzip, zwischen einem zu kühlenden Objekt, im betrachteten Fall eines Sensors 11, und einem Kühlkörper 17 Wärme durch Verdampfen eines Mediums zu transportieren, das in einer Verdampfungszone des Mediums, die sich im gegebenen Fall im Bereich des Sensors befindet, aufzunehmen und durch Konvektion in den Bereich des Kühlkörpers zu transportieren, wo durch Kondensation des verdampften Mediums die Wärmeabgabe an den Kühlkörper erfolgt. Das kondensierte, abgekühlte Medium strömt zurück zur Verdampfungszone, wo es wieder verdampft und so der Wärmetransport aufrechterhalten wird. Derartige Wärmerohre (Heat-Pipes) können so ausgebildet sein, dass das kondensierte Wärmetransportmedium durch den Einfluss der Schwerkraft zurück zur Verdampfungszone fließt, was jedoch eine bestimmte Geometrie der Wärmerohranordnung voraussetzt. Bevorzugt werden bei einer erfindungsgemäßen Kühleinrichtung 10 jedoch Wärmerohre eingesetzt, bei denen der Rücktransport des Wärmetransportfluids von der Kondensationszone zur Verdampfungszone durch Kapillarwirkung innerhalb der Wärmerohre erzielt wird, um von deren Lage der Rohre im Raum unabhängig zu sein.

Für einen typischen Temperaturbereich, in dem eine erfindungsgemäße Kühleinrichtung 10 einsetzbar sein soll, ist als Wärmetransportmedium Wasser oder Quecksilber geeignet, allgemein solche Flüssigkeiten, deren Siedetemperatur unterhalb der Umgebungstemperatur liegt, bei der der jeweilige Sensor betreibbar sein soll.

Solche Wärmerohre ermöglichen eine drastische Reduktion des Wärmewiderstandes, sodass im betrachteten Fall ein Wärmewiderstand von 0,2 [°K]/[W] in Ansatz gebracht werden kann.

Zum angegebenen Zweck geeignete Wärmerohre sind im Handel erhältlich, z.B. von der Firma CRS Engineering Limited, Alnmarin House, Willowburn Industrial Estate, Alnwick, Northumberland, NE 66 2 PQ, United Kingdom.

Für die solchermaßen ergänzte Kühleinrichtung 10, für die im Übrigen dieselbe Auslegung vorausgesetzt sei, wie anhand der Fig. 1 - 2b geschildert, ergibt sich somit für den Gesamt-Wärmewiderstand $R_{thges}$ der Wert 8,75 [°K]/[W], dem ein Wärmestrom $\dot{Q}$ von 25,14 W entspricht, wenn wiederum davon ausgegangen wird, dass die Umgebungstemperatur den Betrag von 250 [°C] hat und der Kühlkörper auf einer Temperatur von 30 [°C] gehalten wird.

Für die im stationären Betrieb sich einstellende Temperatur $T_S$ des Sensors 11 ergibt sich in diesem Falle der Wert von 35°, d.h. ein Wert, der der Hälfte der höchstzulässigen Betriebstemperatur entspricht und daher mit einer drastischen Herabsetzung der Gefahr einer thermischen Beschädigung des Sensors 11 einhergeht.

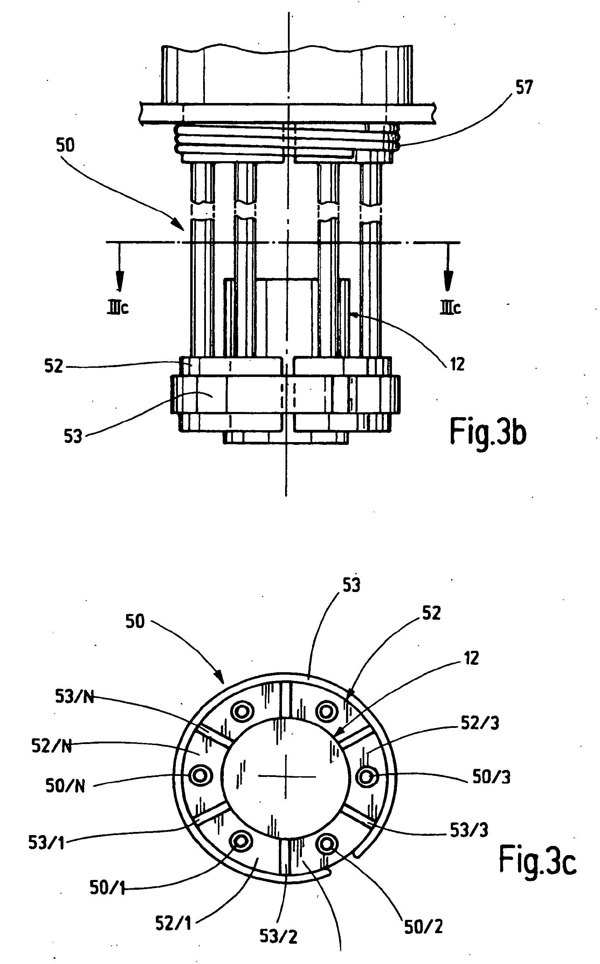

Bei den Wärmerohranordnungen gemäß den Fig. 3a und 3b sind die Wärmerohre jeweils azimutal äquidistant gruppiert sind. Sie sind entweder, wie im linken Teil der Fig. 3a angedeutet, an der radial äußeren Seite des zylindrischen Abschnitts des Trägerrohres anliegend angeordnet, oder, wie im rechten Teil der Fig. 3a dargestellt, unmittelbar an der Außenseite des Sensorgehäuses 12 anliegend angeordnet und sind an ihrer dem Kühlkörper 17 abgewandten Seite mit einem im Wesentlichen ringförmigen, insgesamt mit 52 bezeichneten Wärmekontaktkörper mechanisch fest und thermisch gut leitend verbunden, der seinerseits in gutem thermischem Kontakt mit dem Sensorgehäuse 12 gehalten ist.

Der Wärmekontaktring 52 des Ausführungsbeispiels gemäß Fig. 3b, in der die Kühleinrichtung 10 in einer schematischen Seitenansicht dargestellt ist, ist, wie der Schnittdarstellung der Fig. 3c entnehmbar, in eine der Anzahl der die Wärmerohranordnung bildenden Einzel-Wärmerohre 50/1 - 50/N entsprechende Anzahl von Ringsektorelemente 52/1 - 52/N unterteilt, mit denen je eines der Wärmerohre 50/1 - 50/N mit seiner Verdampferzone verbunden ist, wobei die einzelnen Sektorelemente 52/1 - 52/N des insgesamt ringförmigen Wärmekontaktkörpers 52 durch schmale, radial verlaufende Schlitze 53/1 - 53/N in azimutaler Richtung gegeneinander abgesetzt sind.

Zweck dieser Unterteilung des Kontaktkörpers in ringsektorförmige Elemente, die durch die Radialschlitze in einem kleinen azimutalen Abstand voneinander gehaltene sind, ist es, diese sektorförmigen Wärmekontaktelemente an die äußere Mantelfläche 54 des Sensorgehäuses wärmetechnisch gut leitend andrücken zu können, um den Wärmewiderstand zwischen dem Sensorgehäuse 21 und dem jeweiligen Kontaktkörpersektorelement 52/1 - 52/N so gering wie möglich zu halten.

Zu diesem Zweck können wiederum federelastische Klemmspangen 53, deren Gestaltung zu derjenigen der Klemmspangen 51 gemäß Fig. 3b analog ist, eingesetzt werden, die, vorzugsweise in den den Sektorbereichen benachbarten Abschnitten der Wärmerohre 50/1 - 50/N diese umgreifen und durch eine "zentripetale" Vorspannung die umgriffenen Sektorelemente 52/1 - 52/N des Wärmekontaktkörpers 52 an das Sensorgehäuse des jeweiligen Sensors andrücken und dadurch mit diesem in gutem Wärmekontakt halten.

Eine diesbezüglich erforderliche, geringfügige Biegeelastizität der Wärmerohre 50/1 - 50/N, deren kühlkörperseitige Enden mechanisch fest mit einem ringförmigen Anschlusselement des Kühlkörpers verbunden sein können, ist bei Wärmerohren, deren typische Durchmesser um 3 mm und deren Wandstärken im Bereich einiger Zehntel mm liegen, bei Längen der Wärmerohre im Bereich mehrerer cm, ohne Weiteres voraussetzbar.

Bei dem Ausführungsbeispiel gemäß den Fig. 3b und 3c ist - stillschweigend - vorausgesetzt, dass die radiale Dicke der Isolationsschicht größer ist als der Durchmesser der Wärmerohre 50/1 - 50/N, so dass diese, in radialer Richtung gesehen, auf jeden Fall innerhalb der Isolationsschicht untergebracht werden können und keinesfalls das Schutzgehäuse, das die Isolationsschicht außenseitig umschließt, berühren, wodurch ein wärmetechnischer Kurzschluss zwischen Schutzgehäuse und Trägerrohr bzw. Wärmekontaktring 52 entstehen könnte, der zu vermeiden ist.

Durch eine Wärmerohranordnung, wie anhand der Fig. 3a - 3c erläutert, ist eine schlanke, d.h. in radialer Richtung mit relativ geringem Außendurchmesser behaftete Bauweise einer erfindungsgemäßen Kühleinrichtung 10 möglich, die gleichwohl einen wirksamen Schutz des jeweiligen Sensors gegen eine erhöhte Umgebungstemperatur vermittelt.

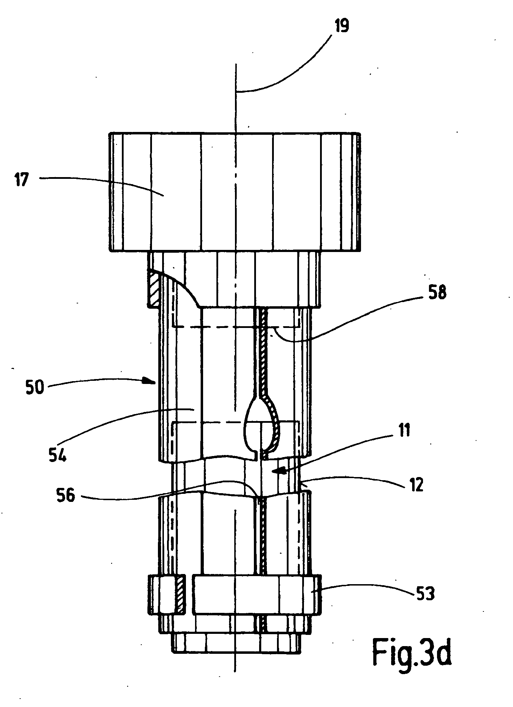

Unter dem Gesichtspunkt der Realisierung einer erfindungsgemäßen Kühleinrichtung mit möglichst geringen radialen Dimensionen ist es besonders zweckmäßig, anstelle einer aus diskreten Rohren zusammengesetzten Wärmerohranordnung ein einziges, insgesamt mit 54 bezeichnetes, im wesentlichen zylindermantelförmiges Wärmerohr zu verwenden (Fig. 3d), das, abgesehen von einem parallel zur zentralen Längsachse 19 der Kühleinrichtung 10 verlaufenden schmalen Längsschlitz 56, dessen azimutale Weite von ca. 1 bis höchsten 5° vernachlässigbar ist, das Sensorgehäuse vollständig umschließt und bei zylindrisch glatter Gestaltung der äußeren Mantelfläche desselben, an welcher das Wärmerohr 54 unmittelbar anliegt, einen geringen Wert des Wärmewiderstandes zwischen Wärmerohr und Sensor ergibt.

Auch zum Andrücken eines solchermaßen gestalteten Wärmerohres 54 an das Sensorgehäuse sind Klemmspangen geeignet, wie anhand der Fig. 3b und 3c, dem analogen Zweck entsprechend, erläutert worden sind.

Im Falle einer derartigen rohrförmigen Gestaltung des Wärmerohres ist es natürlich ausreichend, wenn das Wärmerohr 54 in einem jeweils streifenförmigen Bereich des Kühlkörpers 17 bzw. des Sensorgehäuses 12 des jeweiligen Sensors 11 an eine Mantelfläche entsprechender axialer Ausdehnung andrückbar ist.

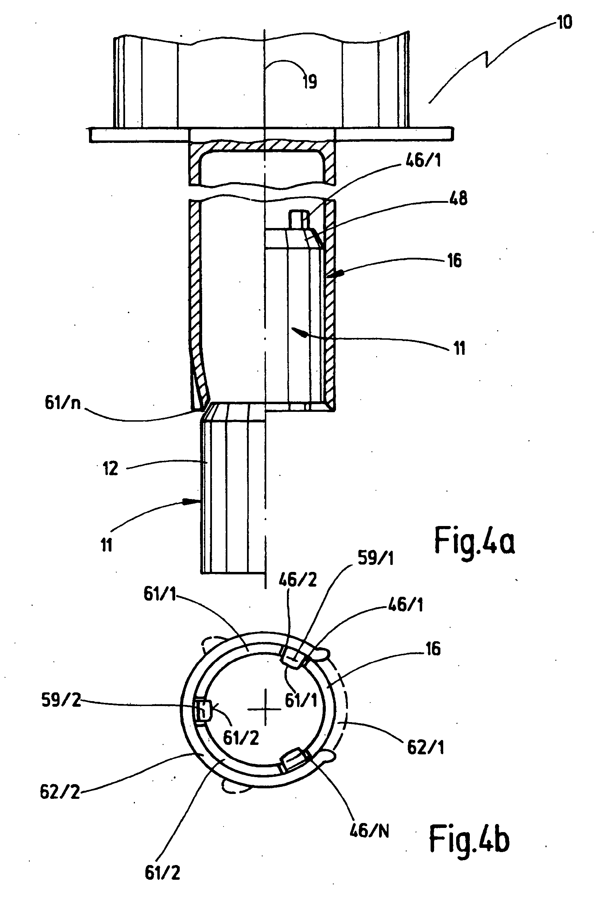

Hierzu geeignete Klemmelemente können ebenfalls in der Art von Spangen ausgebildet sein, wie anhand der Fig. 3b und 4a erläutert. In der speziellen Gestaltung gem. Fig. 4a sind solche Elemente als in axialer Richtung relativ kurze Schraubenfedern 57, die nur wenige, z.B. zwei oder drei komplette Windungen haben, ausgebildet, die jeweils 360° umschlingen. Sie bestehen in besonders zweckmäßiger Gestaltung aus einem Material, z.B. Nitinol, das die Eigenschaft hat, unterhalb einer Phasenumwandlungstemperatur nachgiebig und leicht verformbar zu sein und oberhalb dieser Phasenumwandlungstemperatur wieder eine Form anzunehmen, die ihm zuvor - bei erhöhter Temperatur - eingeprägt worden ist.

Im betrachteten Fall der Schraubenfederform hat die jeweilige Feder, für sich gesehen, einen geringfügig kleineren Durchmesser als das Wärmerohr in seiner an das Sensorgehäuse bzw. an den Kühlkörper 17 angesetzten Konfigurationen, so dass die Federn, nachdem sie bei einer Temperatur unterhalb der Phasenumwandlungstemperatur, d.h. im Zustand ihrer leichten Deformierbarkeit, in ihre vorgesehene Einbaulage gebracht worden sind, nach dem Überschreiten der Phasenumwandlungstemperatur wieder ihre eingeprägte Form annehmen "wollen", in der sie, gleichsam unter zentripetaler Vorspannung stehend, das Wärmerohr in Anlage mit dem Sensorgehäuse 11 und dem Kühlkörper 17 halten.

Es versteht sich, dass auch die vorerwähnten Klemmspangen 51 aus einem derartigen Material gefertigt sein können, wenn eine radial wenig auftragende und für die Montage günstige Form der Wärmerohr-Fixierung innerhalb der Kühleinrichtung 10 insgesamt erreichbar sein soll.

Eine Reduzierung der Sensortemperatur $T_S$ ist, andererseits, auch dadurch erreichbar, dass der Wärmewiderstand, der durch das Schutzgehäuse und die Isolationsschicht gegeben ist, verglichen mit dem Ausführungsbeispiel, das mit dem Gesamtwärmewiderstand von 10,31 [°K]/[W] behaftet ist, erhöht und dadurch der Wärmestrom zum Sensor 11 reduziert wird.

Wird z.B. bei dem zur Abschätzung gewählten Ausführungsbeispiel der Gesamtwiderstand $R_{thges}$ im Wesentlichen durch Verdoppelung der Dicke der Isolationsschicht auf 15 [°K]/[W] erhöht, womit eine Reduzierung des Wärmestromes $\dot{Q}$ auf 14,7 W verknüpft wäre, so ergibt sich für die Sensortemperatur Ts ein Wert von 56°, d.h. ein Wert, der ebenfalls signifikant niedriger ist als der Temperaturgrenzwert von 70°.

Zur Erläuterung bei Bedarf nutzbarer Gestaltungen einer - erfindungsgemäßen - Kühleinrichtung 10, die je nach Einsatzfall alternativ oder ergänzend zu den vorerwähnten Gestaltungen einer solchen Einrichtung zweckmäßig sein können, sei zunächst auf die Fig. 3a und 3b ergänzend Bezug genommen, vorab im Hinblick auf die Fixierung des Sensors 11 am Sensorträger 16, die insbesondere wärmetechnisch gut leitend und mechanisch stabil sein soll.

Bei der durch die Fig. 3a veranschaulichten Art der mechanischen und thermischen Ankopplung des Sensors 11 an seinen Träger 16 ist vorausgesetzt, dass das Sensorgehäuse eine äußerlich glatte Mantelfläche hat, die, wenn der Sensor 11 in der Montageposition innerhalb des Sensorträgers 16 zumindest mit einem Abschnitt seiner Länge angeordnet ist, großflächig an der ebenfalls glatten, inneren Mantelfläche des rohrförmigen Sensorträgers 16 anliegt.

Der zylindrisch rohrförmige Bereich des Sensorträgers 16 ist, wie den Fig. 4a und 4b entnehmbar, durch Längsschlitze 46/1 - 46/N, die sich parallel zur zentralen Längsachse 19 der Kühleinrichtung 10 erstrecken und bezüglich dieser in einer axial- oder drehsymmetrischen Anordnung gruppiert sind, in schmal-zungenförmige Andrückelemente 59/i vergleichsweise geringer azimutaler Ausdehnung und sektorförmige Anlageelemente 61/i (i = 1 - N/2) unterteilt, an deren inneren, glatten Mantelflächenbereichen das Sensorgehäuse in thermisch gut leitende Anlage gelangt, wenn der Sensor 11 in Richtung der zentralen Längsachse in das Trägerrohr 12 eingesteckt wird. Die zungenförmigen Andrückelemente 59/1 - 59/N sind derart gestaltet, dass ihre dem Kühlkörper 17 abgewandten freien Enden 61/1 - 61/N zur zentralen Achse 19 der Kühleinrichtung 10 hin geneigt verlaufen, solange der Sensor noch nicht in das Trägerrohr 16 eingesteckt ist, wobei diese Neigung nur wenige Winkelgrade beträgt und im Übrigen die Abmessungen so getroffen sind, dass diese freien Enden der zungenförmigen Andrückelemente, wenn der Sensor aus dem linken Teil der Fig. 4a dargestellten Position in die im rechten Teil der Fig. 4a dargestellte Position gebracht wird, eine radiale Aufweitung erfahren und dadurch Federspannungen entfalten, die den Sensor 11 innerhalb des rohrförmigen Sensorträgers 16 reibungsschlüssig halten. Das Sensorgehäuse 12 ist zur Erleichterung des Einsteckens des Sensors in das Trägerrohr mit einer kegelstumpfförmigen Fasenfläche 48 versehen, innerhalb derer der Durchmesser des Sensorgehäuses von einem Wert, der dem Innendurchmesser des Trägerrohres 16 entspricht, auf einen Wert abnimmt, der signifikant kleiner ist als dieser Innendurchmesser des Trägerrohres.

Es versteht sich, dass abweichend von dem durch die Fig. 4a und 4b repräsentierten, speziellen Ausführungsbeispiel, die zwischen federnden Zungen angeordneten sektorförmigen Mantelbereiche 63/n auch eine andere, z.B. dieselbe azimutale Ausdehnung haben können, wie die federnden Zungen 59/1 bis 59/N, je nach den Abmessungen des jeweiligen Sensors und der Auslegung der Kühleinrichtung 10 insgesamt.

Im Falle einer derartigen, reibungsschlüssigen Fixierung des Sensors 11 im Trägerrohr 16 kann es zweckmäßig sein, die den Sensor im Trägerrohr fixierenden Spannkräfte mit Hilfe von Klemmspangen 62/1 und 62/2 zu erzeugen, die für sich gesehen, einen Winkelbereich von mehr als 180° umspannen und, außenseitig an den Klemm- und Anlageelementen des Trägerrohres anliegend, paarweise jeweils den gesamten Umfang des Trägerrohres umspannen.

Das Trägerrohr 16 ist aus einem Material gefertigt, das eine hohe spezifische Wärmeleitfähigkeit hat und ist zweckmäßigerweise insgesamt so ausgelegt, dass sein Wärmewiderstand, der zwischen der Wärmeübergangszone, innerhalb derer der Sensor 11 in gutem thermischen Kontakt mit dem Trägerrohr 16 steht, und dem Kühlkörper, der die Wärmesenke für den ihm über das Trägerrohr zufließenden Wärmestrom bildet, klein gegen den Wärmewiderstand der Isolationsschicht ist, über die dem Sensorträger selbst Wärme aus der Umgebung zuströmt. In einer typischen Auslegung entspricht der Wärmewiderstand des Trägerrohres höchstens 1/10 des Wärmewiderstandes der Isolationsschicht, wobei es, solange nicht konstruktive Bedingungen entgegenstehen, in der Regel zweckmäßig ist, den Wärmewiderstand des Trägerrohres 16 möglichst gering zu wählen.

Bei den bislang erläuterten Gestaltungen der erfindungsgemäßen Kühleinrichtung ist deren Schutzgehäuse 26 als ein Keramikteil vorausgesetzt, z.B. aus Aluminiumoxid oder Zirkonoxid, dessen elektromagnetische Eigenschaften einen Einsatz sowohl in Verbindung mit einem kapazitiven Sensor als auch mit einem induktiven Sensor erlauben. Dies gilt auch dann, wenn das Schutzgehäuse aus einem Kunststoff besteht, der hinreichend temperaturbeständig ist, z.B. einem PEEK (Polyetheretherketon)-Material. Der Einsatz eines induktiven Sensors ist bei einer Kühleinrichtung der insoweit erläuterten Art auch dann möglich, wenn das Schutzgehäuse aus einem Metall geringer elektrischer Leitfähigkeit (z.B. Titan) besteht, in dem sich störende Wirbelströme nicht oder nur in einem hinnehmbaren Maß ausbilden können.

Dies gilt auch dann, wenn das Gehäuse aus einem Metall vergleichsweise guter Leitfähigkeit besteht, wenn im Bereich des induktiven Sensorelements parallel zur Längsachse der Anordnung verlaufende Längsschlitze vorhanden sind, gegebenenfalls auch radial verlaufende Schlitze, die in einem radial zur zentralen Längsachse verlaufenden Randbereich angeordnet sind und ebenfalls geeignet sind, Wirbelströme weitgehend zu unterdrücken.

Eine hierzu analoge Gestaltung kann auch für ein Schutzgehäuse zweckmäßig sein, wenn dieses aus einem elektrisch relativ gut leitenden Material, z.B. einem Edelstahlblech besteht, im Unterschied zu dem Keramikschutzgehäuse 26, wie anhand der Fig. 1 und 2a erläutert.

Wenn das Schutzgehäuse aus einem Metall besteht, das polierfähig ist, ist es zweckmäßig, die Außenfläche des Schutzgehäuses durch Politur so zu glätten, dass ein hohes Reflexionsvermögen mindestens für die aus der Umgebung auftreffende elektromagnetische Strahlung erzielt und dadurch ein Wärmeeintrag in den Sensor deutlich reduziert wird.

In Fällen, in denen das Schutzgehäuse aus Keramik besteht, wie vorausgehend schon erläutert, oder aus Glas oder einem temperaturbeständigen Kunststoff, ist ein thermischer Schutz auch durch eine Außenbeschichtung aus einem Material geeignet, das elektromagnetische Strahlung aus dem Spektralbereich der Umgebungs-Wärmestrahlung reflektiert, vorzugsweise eine Gold- oder Chromschicht.

Soweit zwischen dem Sensor und dem Mess- oder Beobachtungsobjekt zur Erfassung der überwachten Größe eine Wechselwirkung durch elektromagnetische Strahlung, z.B. HF-Strahlung oder Strahlung aus dem sichtbaren Spektralbereich erforderlich ist, z.B. für eine Kamera als Sensor, muss natürlich das Gehäuse mindestens in einem Fensterbereich für diese Strahlung durchlässig - "durchsichtig - sein. Erforderlichenfalls muss eine Öffnung an der objektseitigen Stirnseite des Gehäuses frei gehalten bleiben und demgemäß "notfalls" das Detektorelement einem Teil der Umgebungsstrahlung ausgesetzt werden; die kann jedoch hingenommen werden, wenn z.B. der Öffnungswinkel, innerhalb dessen direkte Temperaturstrahlung auf das Sensorelement auftreffen kann, klein gehalten werden kann und/oder, z.B. durch eine effiziente Wärmerohranordnung, dafür gesorgt ist, dass der Sensor trotz der Einstrahlung auf einer Temperatur gehalten werden kann, die signifikant niedriger ist als der für den Sensor charakteristische Schwellenwert $T_{Smax}$.

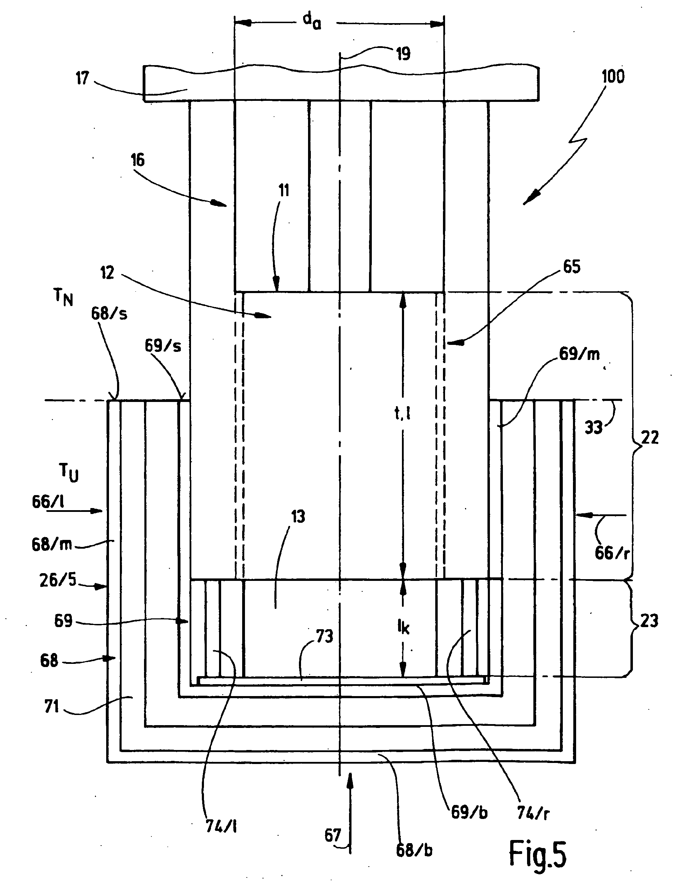

Zur Erläuterung eines weiteren Ausführungsbeispiels einer erfindungsgemäßen Kühleinrichtung, wie dem grundsätzlichen Aufbau nach anhand der Fig. 1 bis 4b erläutert, sei nunmehr auf die Fig. 5 Bezug genommen, in der insgesamt mit 100 eine Kühleinrichtung bezeichnet ist, die für einen Einsatz bei vergleichsweise hohen Temperaturen gedacht ist, z. B. für einen Temperaturbereich bis hin zu 1200° Z, insbesondere für eine kontinuierliche Überwachung gleichmäßigen Flusses einer Metallschmelze, meist einer Kupferschmelze, mittels eines induktiven Sensors 11, wie auch beim Ausführungsbeispiel gemäß den Fig. 1 bis 4b vorausgesetzt, wobei dieser Sensor, ohne Beschränkung der Allgemeinheit, als so genannter "Faktor 1"-Sensor mit Freizone vorausgesetzt sei, d. h. als ein Sensor, der unabhängig von der Art der Metallschmelze mit einem im Wesentlichen gleich bleibenden Schaltabstand anspricht.

Soweit in der nachfolgenden Beschreibung für Elemente der Kühleinrichtung 100 Bezugszeichen angegeben sind, die auch schon der vorausgehenden Erläuterung des Ausführungsbeispiels gemäß den Fig. 1 bis 4b angegeben worden sind, soll dies den Hinweis auf die Bau- und Funktionsgleichheit bzw. -Analogie der identisch bezeichneten Elemente beinhalten; soweit in der Fig. 5 Bezugzeichen angegeben sind, die mit Bezugzeichen identisch sind, die bei der Erläuterung des Ausführungsbeispiels gemäß den Fig. 1 bis 4b verwendet, bei der Beschreibung der Fig. 5 jedoch nicht eigens erwähnt worden sind, soll dies den Hinweis auf die zu den jeweils identisch bezeichneten Teilen anhand der Fig. 1 bis 4b gegebenen Erläuterungen beinhalten, um Wiederholungen zu vermeiden.

Demgemäß soll die Erläuterung der Kühleinrichtung 10 gemäß Fig. 5 im Wesentlichen auf deren gegenüber der vorausgehenden Kühleinrichtung 10 unterschiedliche Merkmale beschränkt werden.

Für den Sensor 11 ist dieselbe Ausbildung vorausgesetzt, wie anhand der Fig. 1 erläutert. Er ist in eine sacklochförmige Gewindebohrung 65 des Sensorträgers 16 angeschraubt, deren in Richtung der zentralen Längsachse 19 gemessene Tiefe t der axialen Länge I des mit dem Außengewinde 12/a versehenen Sensorgehäuses 12 entspricht, das auf seiner gesamten in axialer Richtung gemessenen Länge von der Gewindebohrung 65 aufgenommen ist, wodurch im Falle der Kühleinrichtung 100 die axiale Ausdehnung der Wärmekontaktregion 22 bestimmt ist, innerhalb derer der Sensor 11 über sein Sensorgehäuse 12 in innigem Wärmekontakt mit dem Sensorträger 16 steht, der den induktiven Sensor 11 thermisch gut leitend mit dem Kühler 17 verbindet.

Der Sensorträger 16 hat äußerlich die Form eines Kreiszylinders, dessen zentrale Längsachse mit der zentralen Längsachse 19 der Kühleinrichtung 100 in deren dargestellter, montierter, d. h. für den bestimmungsgemäßen Gebrauch geeigneten Konfiguration, zusammenfällt. Aufgrund der geometrischen Abmessungen des Sensorträgers 16 und der hohen Wärmeleitfähigkeit des Materials, aus dem er gefertigt ist, befindet sich der Sensorträger 16 im Betrieb der Kühleinrichtung 100 praktisch auf dem Temperaturniveau des Kühlers 17, der die Wärmesenke des betrachteten Kühlsystems darstellt.

Analog den anhand der Fig.1, 2a und 2b gegebenen baulichen und funktionellen Erläuterungen des in diesen dargestellten Ausführungsbeispiels, sei auch für die Kühleinrichtung 100 gemäß Figur 5 davon ausgegangen, dass in Höhe einer nur gestrichelt angedeuteten Trennwand 33 eine Trennung zwischen einem "oberen" Bereich relativ niedriger Umgebungstemperatur $T_N$ gegen einen Bereich hoher Umgebungstemperatur $T_U$ gegeben sei, so dass im stationären Zustand der Einrichtung ein Wärmestrom aus dem Bereich erhöhter Temperatur $T_U$ über das Schutzgehäuse 26/5 und den Sensorträger 16 zu dem Kühler 17 strömt, wobei zwischen der "heißen" Außenseite des Schutzgehäuses 26 und der Kühleinrichtung 17 ein Temperaturgefälle sich einstellt, derart, dass im Bereich des Sensorelements 13 nur noch eine Temperatur herrscht, die hinreichend niedrig ist, dass das Sensorelement 13 thermisch nicht beschädigt werden kann.

Zu diesem Zweck ist, eine Ausführung des Sensors 11 vorausgesetzt, bei der dessen Träger 16 sowie das Schutzgehäuse 26 mehr im einzelnen wie folgt realisiert sind, wobei davon ausgegangen ist, dass im stationären Betrieb der abzuführende Wärmestrom, d.h. die Kühlleistung der Einrichtung, einen Wert um 90 W halbe.

Unter den genannten Umgebungsbedingungen nämlich einer Temperatur der Wärmequelle um 1.200 °C und einer Temperatur im Bereich der Kühleinrichtung um 60 °C ist unter den vorausgehend weiter angegebenen Forderungen eine Gestaltung der Kühleinrichtung 100 geeignet, die bei Verwendung eines Standardsensors 11 wie folgt realisiert sein kann:

- Außendurchmesser da des Sensorgehäuses 12 von 30 mm,
- axiale Länge des Sensorgehäuses 12 bzw. Länge I des Wärmekontaktbereiches 22 von 64 mm,
- axiale Ausdehnung $I_k$ des Kopfbereiches 23 des Sensors von 20 mm.

In diesem Fall ist zur Erfüllung der vorgenannten Forderungen ein Schutzgehäuse geeignet, dass mehr im Einzelnen mit den der maßstäblichen Darstellung der Fig. 5 entnehmbaren Dimensionen seiner isolierenden Schichten wie folgt realisiert sein kann:

Das Schutzgehäuse 26/5 der Kühleinrichtung 100 ist in der Art eines mehrschichtigen Wärmeisolationssystems ausgebildet, das, gesehen in Richtung der Pfeile 66-/l und 66/r der Fig. 5, d.h. in radialer Richtung bezüglich der zentralen Achse 19 und auch gesehen in Richtung des Pfeils 67, d.h. "von unten" in axialer Richtung mehrere Materialschichten unterschiedlicher mechanischer Konsistenz und thermischer Leitungseigenschaften aufweist. Das Schutzgehäuse 26/5 umfasst ein insgesamt mit 68 bezeichnetes, äußeres, oben offenes, zylindrisch-topfförmiges Isolationselement, das der hohen Umgebungstemperatur von bis zu 1.200 °C ausgesetzt ist. Es besteht aus temperaturfestem Keramikmaterial, im gegebenen Fall Aluminiumoxid.

Des Weiteren umfasst das das Schutzgehäuse bildende Wärmeisolationssystem ein zweites, inneres, insgesamt mit 69 bezeichnetes, topfförmiges Isolationselement, das mit dem äußeren, topfförmigen Isolationselement 68 koaxial derart angeordnet ist, dass die kühlerseitige obere Stirnfläche 69/s seines zylindrischen Mantels 69/m koplanar mit der äußeren, oberen freien Ringstirnfläche 68/s des zylindrischen Mantels 68/m des äußeren topfförmigen Isolationselements 68 angeordnet ist. Das innere topfförmige Isolationselement 69 besteht aus Alunit-Material, wobei die Wanddicke sowohl im Mantelbereich 69/m als auch im Bereich des Bodens 69/b jeweils ca. 2 mm beträgt.

Die geometrischen Abmessungen der beiden topfförmigen Isolationselemente 68 und 69 sind so gewählt, dass der radiale Abstand ihrer Mantelbereiche 68/m und 69/m, die koaxial bezüglich der zentralen Achse 19 angeordnet sind, beim dargestellten Ausführungsbeispiel um 10 mm beträgt. Der "vertikale" Abstand der Bodenbereiche 69/b und 68/b der topfförmigen Isolationselemente 68 und 69 voneinander, ist etwas geringer und beträgt z. B. 8 mm.

Der zwischen den beiden topfförmigen Isolationselementen 68 und 69 verbleibende, komplementär topfförmige Zwischenraum ist mit zwei Isolationsschichten unterschiedlichen Materials ausgekleidet, die jeweils unmittelbar aneinander wie an je einem der topfförmigen Isolationselemente anliegen.

Die äußere, insgesamt mit 71 bezeichnete Isolationsschicht besteht aus einem Keramik-Vlies mit einer Dicke im Mantelbereich von ca. 4 mm und im Bodenbereich von etwa 3 mm; die innere, das innere topfförmige Isolationselement umschließende, insgesamt mit 72 bezeichnete Isolationsschicht besteht aus Mikrotherm-Super-A-Material, das eine Schichtdicke um 5 mm hat. Die freien Stirnflächen der Isolationsschichten verlaufen in Höhe der Ringstirnflächen 68/s und 69/s der topfförmigen Isolationselemente 68 bzw. 69.

Das in der Kopfregion 23 des Schutzgehäuses 26/5, d. h. in der sogenannten Freizone des Sensors 11 angeordnete Sensorelement 13 ist an der ihm zugewandten Innenseite des Bodenbereiches 69/b über eine Wärmeleitplatte 73 möglichst guter Wärmeleitfähigkeit abgestützt, die über zwei, bezüglich der zentralen Längsachse 19 diametral einander gegenüberliegende Wärmerohre 74/l und 74/r mit dem Sensorträger 16 thermisch gekoppelt ist, der sich, mit der Kühleinrichtung 17 in unmittelbarem Wärmekontakt stehend, auf relativ niedriger Temperatur befindet, mit der Folge, dass diese relativ niedrige Temperatur mindestens annähernd auch im Bereich des Sensorelements 13 gegeben ist, obwohl dort die Dicken der Isolationsschichten 71 und 72 relativ gering gehalten sind, um den Schaltabstand des Sensors möglichst weitgehend ausnutzen zu können, d. h. einen geringen Abstand des Sensorelements 13 zum Messobjekt wählen zu können.

Als Wärmeleitplatte 73 kann in extremen Fällen der Einsatz einer Diamantplatte erforderlich sein, die in Anbetracht der industriellen Herstellbarkeit solcher Platten relativ preisgünstig erhältlich ist.

Es versteht sich, dass die erläuterte Auslegung lediglich beispielhaft zu verstehen ist und als Orientierung für eine sinngemäße Abwandlung und Anpassung der Kühleinrichtung 100 an andere Randbedingungen und Kühlleistungsanforderungen gedacht ist, die dem Fachmann aufgrund seines Fachwissens ohne weiteres möglich ist.

**Patentansprüche**

1. Sensoranordnung mit einem Sensor und einer Kühleinrichtung, wobei der Sensor zur Erfassung einer physikalischen Größe, wie z. B. Weg, Winkel, Druck, Kraft, Farbe, Struktur bestimmt ist und seine Betriebstemperatur einen Schwellenwert $T_S$ nicht überschreiten darf, wobei der Sensor bei einer erhöhten Umgebungstemperatur $T_U > T_S$ einsetzbar sein soll, wobei der Sensor ein auf die physikalische Größe ansprechendes Sensorelement (13) sowie ein das Sensorelement aufnehmendes, der Grundform nach rohrförmiges Sensorgehäuse (12) umfasst, das die Wärmeübertragung von dem Sensor (11) auf einen Kühlkörper (17) der Kühleinrichtung vermittelt, wobei der Sensor (11) am einen Ende eines aus wärmeleitendem Material bestehenden, der Grundform nach rohrförmigen Sensorträgers (16) lösbar fixierbar ist, wobei das andere Ende des Sensorträgers (16) thermisch an dem Kühlkörper (17) angekoppelt ist, über welchen eine Wärmeabgabe an ein den Kühlkörper umgebendes oder diesen durchströmendes Kühlfluid erfolgt, wobei ein den Sensorträger (16) umgebendes topfförmiges Schutzgehäuse (26;26/5) vorgesehen ist, das sowohl einen mechanischen als auch einen thermischen Schutz vermittelt und das an seinem dem Sensorelement (13) benachbarten Bodenbereich (26/1) einen Fensterbereich hat, über den die zu erfassende physikalische Größe in Wechselwirkung mit dem Sensorelement gelangt, und wobei eine Wärmerohreinrichtung zur Wärmeabfuhr (50;74/l,74/r) vorgesehen ist, mittels derer mindestens aus dem Fensterbereich des Schutzgehäuses Wärme abführbar ist, **dadurch gekennzeichnet, dass** das Schutzgehäuse (26) ein Wärmeisolationssystem aufweist, das ein äußeres topfförmiges Isolationselement (68), ein koaxial dazu angeordnetes, eine Aufnahme für das Sensorelement (13) aufweisendes inneres topfförmiges Isolationselement (69) sowie mindestens eine auf der Innenseite des Schutzgehäuses angeordnete Isolierschicht (29;71,72) aus wärmedämmendem Material umfasst, und dass für das innere Isolationselement (69) ein Festkörperteil aus Alunit® verwendet ist.

2. Sensoranordnung nach Anspruch 1, **dadurch gekennzeichnet, dass** die Isolierschicht eine äußere Isolationsmaterialschicht (71) und eine innere Isolationsmaterialschicht (72) umfasst, dass die äußere Isolationsmaterialschicht (71) an das äußere Isolationselement (68) thermisch angrenzt und die innere Isolationsmaterialschicht (72) an das innere Isolationselement (69) und/oder an den Sensorträger (16) thermisch angrenzt und wobei der durch die innere Isolationsmaterialschicht (72) implementierte Wärmewiderstand größer als derjenige der äußeren Isolationsmaterialschicht (71) ist.

3. Sensoranordnung nach Anspruch 1 oder 2, **dadurch gekennzeichnet, dass** das äußere Isolationselement (68) des Schutzgehäuses aus Keramikmaterial, insbesondere aus Aluminiumoxid oder Zirkonoxid oder aus einem hochtemperaturfesten Kunststoff, wie PEEK besteht.

**4.** Sensoranordnung nach einem der Ansprüche 1 bis 3, **dadurch gekennzeichnet, dass** die Isolierschicht (29) ein Keramikvlies aufweist.

**5.** Sensoranordnung nach einem der Ansprüche 2 bis 4, **dadurch gekennzeichnet, dass** eine der Isolationsmaterialschichten (72) aus Microtherm®-Super A-Material besteht.

**6.** Sensoranordnung nach einem der Ansprüche 1 bis 5, **dadurch gekennzeichnet, dass** der Sensorträger (16) als Metallrohr mit einem Innengewinde (16/i) ausgebildet ist, in das zur lösbaren Fixierung der Sensor einschraubbar ist.

**7.** Sensoranordnung nach Anspruch 6, **dadurch gekennzeichnet, dass** der wirksame Wärmewiderstand (39) des Sensorträgers (16) kleiner ist als der wirksame Wärmewiderstand (38) des Schutzgehäuses (26).

**8.** Sensoranordnung nach einem der Ansprüche 1 bis 7, **dadurch gekennzeichnet, dass** zur Wärmekopplung des Sensorträgers (16) und des Kühlkörpers (17) eine Wärmerohranordnung (50) vorgesehen ist.

**9.** Sensoranordnung nach einem der Ansprüche 1 bis 8, **dadurch gekennzeichnet, dass** die Wärmerohranordnung (50) eine Anzahl der äußeren Form nach stabförmiger Wärmerohre (50/1 bis 50/N) umfasst, die bezüglich einer zentralen Achse (19) der Kühleinrichtung (10) azimutal äquidistant gruppiert sind, und mit ihren Verdampferzonen über eine aus thermisch gut leitendem Material bestehende, der Grundform nach ringförmige Kontaktkörperanordnung (52) mit dem Sensorträger (16) und mit ihren Kondensationszonen in wärmeleitendem Kontakt mit dem Kühlkörper der Kühleinrichtung (17) gehalten sind.

**10.** Sensoranordnung nach Anspruch 9, **dadurch gekennzeichnet, dass** der insgesamt ringförmige Kontaktkörper in mehrere Sektoren (52/1 bis 52/N) vorzugsweise gleicher azimutaler Ausdehnung unterteilt ist, die über jeweils mindestens ein Wärmerohr (50/1 bis 50/N) mechanisch und wärmeleitend mit dem Kühlkörper (17) verbunden und durch Federwirkung in großflächiger Anlage mit dem Sensorträger (16) gehalten sind.

**11.** Sensoranordnung nach einem der Ansprüche 8 bis 10, **dadurch gekennzeichnet, dass** die Wärmerohranordnung, abgesehen von einem schmalen, parallel zur zentralen Achse (19) verlaufenden Spalt (56), als zylindermantelförmig gestaltetes Wärmerohr (54) ausgebildet ist, das mittels mindestens eines, unter zentripetaler Vorspannung stehenden Klemmelements an die äußere Zylindermantelfläche des Sensorträgers angedrückt ist.

**12.** Sensoranordnung nach einem der Ansprüche 1 bis 11, **dadurch gekennzeichnet, dass** die zwischen dem Sensorelement (13) und dem zu überwachenden Objekt angeordnete Wärmeleitschicht (73) mit dem Sensorträger (16) thermisch verbunden ist.

**13.** Sensoranordnung nach Anspruch 12, **dadurch gekennzeichnet, dass** die Wärmerohranordnung aus zwei Wärmerohren (74/l und 74/r) besteht, die einseitig an die Wärmeleitschicht (73) angelötet sind.

**Claims**

**1.** Sensor assembly comprising a sensor and a cooling device, wherein the sensor is intended to measure a physical quantity such as distance, angle, pressure, force, color, or structure, and its operating temperature must not surpass a threshold value $T_S$, where the sensor is to be used in an ambient temperature $T_U > T_S$, wherein the sensor comprises a sensor element (13) responsive to the physical quantity and a generally tube-shaped sensor housing (12) which contains the sensor element and which facilitates heat transfer from the sensor (11) to a heatsink (17) of the cooling device, wherein the sensor (11) is adapted to be removably fixed to one end of a generally tube-shaped sensor carrier (16) consisting of a heat conducting material, wherein the other end of the sensor carrier (16) is thermally coupled to the heatsink (17), by way of which heat is transferred to a cooling fluid surrounding or flowing through the heatsink, wherein there is provided a cup-shaped protective housing (26; 26/5) encompassing the sensor carrier (16), which provides mechanical as well as thermal protection and which has a window portion at its bottom region (26/1) adjacent to the sensor element (13), through which the physical quantity to be measured interacts with the sensor element, and wherein there is provided a heat pipe assembly for heat removal (50; 74/l, 74/r), by means of which heat is removed from at least the window portion of the protective housing, **characterized in that** the protective housing (26) comprises a heat insulation system which comprises an outer cup-shaped insulating element (68), a thereto coaxially disposed inner cup-shaped insulating element (69) which has a reception for the sensor element (13), as well as at least one insulating layer (29; 71, 72) made of heat insulating material and disposed on the inner side of the protective housing, and **in that** a solid state part of Alunit® is used as the inner insulating element (69).

2. Sensor assembly according to claim 1, **characterized in that** the insulating layer comprises an outer insulating material layer (71) and an inner insulating material layer (72), wherein the outer insulating material layer (71) is thermally adjacent to the outer insulating element (68) and the inner insulating material layer (72) is thermally adjacent to the inner insulating element (69) and/or the sensor carrier (16), and wherein the thermal resistance provided by the inner insulating material layer (72) is larger than that of the outer insulating material layer (71).

3. Sensor assembly according to claim 1 or 2, **characterized in that** the outer insulating element (68) of the protective housing consists of a ceramic material, in particular of aluminum oxide or zirconium oxide, or of a highly temperature resistant plastic material such as PEEK.

4. Sensor assembly according to one of claims 1 to 3, **characterized in that** the insulating layer (29) comprises a ceramic fiber mat.

5. Sensor assembly according to one of claims 2 to 4, **characterized in that** one of the insulating material layers (72) consists of Microtherm®-Super A material.

6. Sensor assembly according to one of claims 1 to 5, **characterized in that** the sensor carrier (16) is a metal pipe having an inner thread (16/i), into which the sensor may be screwed to removably fix it.

7. Sensor assembly according to claim 6, **characterized in that** the effective thermal resistance (39) of the sensor carrier (16) is smaller than the effective thermal resistance (38) of the protective housing (26).

8. Sensor assembly according to one of claims 1 to 7, **characterized in that** a heat pipe assembly (50) is provided for the thermal coupling of the sensor carrier (16) and the heatsink (17).

9. Sensor assembly according to one of claims 1 to 8, **characterized in that** the heat pipe assembly (50) comprises a plurality of rod-shaped heat pipes (50/1 to 50/N) which are grouped azimuthally equidistantly to a central axis (19) of the cooling device (10) and which are held in heat conducting contact with the sensor carrier (16) at their evaporation zones by way of a generally annular-shaped contact body assembly (52) made of thermally well conducting material and with the heatsink (17) of the cooling device at their condensation zones.

10. Sensor assembly according to claim 9, **characterized in that** the contact body which is generally annular in shape is divided into a plurality of sectors (52/1 to 52/N) of preferably equal azimuthal size, which are each mechanically and thermally connected to the heatsink (17) by way of at least one heat pipe (50/1 to 50/N) and are held in large area contact with the sensor carrier (16) by way of spring force.

11. Sensor assembly according to one of claims 8 to 10, **characterized in that** the heat pipe assembly, with the exception of a narrow gap (56) extending parallel to the central axis (19), is formed as cylinder shell-shaped heat pipe (54) which is pressed against the outer cylinder surface of the sensor carrier by at least one clamping element having a centripetal bias.

12. Sensor assembly according to one of claims 1 to 11, **characterized in that** the thermal conductor layer (73) disposed between the sensor element (13) and the object to be observed is thermally connected to the sensor carrier (16).

13. Sensor assembly according to claim 12, **characterized in that** the heat pipe assembly consists of two heat pipes (74/l and 74/r) which are unilaterally welded to the thermal conductor layer (73).

**Revendications**

1. Ensemble capteur comprenant un capteur et un dispositif de refroidissement, le capteur étant destiné à la détection d'une grandeur physique telle que, par exemple, déplacement, angle, pression, force, couleur, structure, et sa température de service ne devant pas dépasser une valeur seuil TS, le capteur devant être utilisable à une température ambiante plus élevée TU > TS, le capteur comprenant un élément capteur (13) réagissant à la grandeur physique ainsi qu'un boîtier de capteur (12) recevant l'élément capteur, ayant une forme de base tubulaire, qui assure le transfert de chaleur du capteur (11) vers un dissipateur thermique (17) du dispositif de refroidissement, le capteur (11) pouvant être fixé de manière amovible à une extrémité d'un support de capteur (16) ayant une forme de base tubulaire et constitué d'un matériau thermo-conducteur, l'autre extrémité du support de capteur (16) étant couplée thermiquement au dissipateur thermique (17), lequel assure un transfert de chaleur à un fluide de refroidissement entourant ou traversant le dissipateur thermique, un boîtier de protection (26 ; 26/5) en forme de pot entourant le support de capteur (16) étant prévu, lequel assure une protection aussi bien mécanique que thermique et présente dans sa zone de fond (26/1) adjacente à l'élément capteur (13) une zone de fenêtre par laquelle la grandeur de mesure à détecter entre en interaction avec l'élément capteur, et un ensemble tube échangeur de chaleur étant prévu pour l'évacuation de la chaleur (50 ; 74/l, 74/r), au moyen duquel la chaleur peut être évacuée au moins de la zone de fenêtre du boîtier de protection, **caractérisé en ce que** le boîtier de protection (26) présente un système d'isolation thermique qui comprend un élément isolant extérieur (68) en forme de pot, un élément isolant intérieur (69) en forme de pot, disposé coaxialement à celui-ci, présentant un logement pour l'élément capteur (13) et au moins une couche isolante (29 ; 71, 72) en matériau calorifuge disposée du côté intérieur du boîtier de protection, et qu'une pièce solide en Alunit® est utilisée pour l'élément isolant intérieur (69).

2. Ensemble capteur selon la revendication 1, **caractérisé en ce que** la couche isolante comprend une couche en matériau isolant extérieure (71) et une couche en matériau isolant intérieure (72), que la couche en matériau isolant extérieure (71) est adjacente thermiquement à l'élément isolant extérieur (68) et la couche en matériau isolant intérieure (72) est adjacente thermiquement à l'élément isolant intérieur (69) et/ou au support de capteur (16) et la résistance thermique implémentée par la couche en matériau isolant intérieure (72) étant plus grande que celle de la couche en matériau isolant extérieure (71).

3. Ensemble capteur selon la revendication 1 ou la revendication 2, **caractérisé en ce que** l'élément isolant extérieur (68) du boîtier de protection est constitué d'un matériau céramique, en particulier d'oxyde d'aluminium ou d'oxyde de zirconium, ou d'une matière plastique résistante aux températures élevées, telle que PEEK.

4. Ensemble capteur selon l'une des revendications 1 à 3, **caractérisé en ce que** la couche isolante (29) présente une nappe céramique.

5. Ensemble capteur selon l'une des revendications 2 à 4, **caractérisé en ce que** l'une des couches en matériau isolant (72) est constituée de matériau Microtherm® Super A.

6. Ensemble capteur selon l'une des revendications 1 à 5, **caractérisé en ce que** le support de capteur (16) est réalisé sous la forme d'un tube métallique avec un filetage intérieur (16/i) dans lequel le capteur peut être vissé pour sa fixation amovible.

7. Ensemble capteur selon la revendication 6, **caractérisé en ce que** la résistance thermique efficace (39) du support de capteur (16) est inférieure à la résistance thermique efficace (38) du boîtier de protection (26).

8. Ensemble capteur selon l'une des revendications 1 à 7, **caractérisé en ce qu'**un ensemble tube échangeur de chaleur (50) est prévu pour le couplage thermique du support de capteur (16) et du dissipateur thermique (17).

9. Ensemble capteur selon l'une des revendications 1 à 8, **caractérisé en ce que** l'ensemble tube échangeur de chaleur (50) comprend une pluralité de tubes échangeurs de chaleur (50/1 à 50/N) ayant une forme extérieure de barre, qui sont groupés de manière équidistante en direction azimutale par rapport à un axe central (19) du dispositif de refroidissement (10), et qui sont maintenus, par l'intermédiaire d'un ensemble corps de contact (52) ayant une forme de base annulaire et constitué d'un matériau bon conducteur de la chaleur, en contact thermoconducteur avec le support de capteur (16) par leurs zones d'évaporateur et avec le dissipateur thermique du dispositif de refroidissement (17) par leurs zones de condensation.

10. Ensemble capteur selon la revendication 9, **caractérisé en ce que** le corps de contact de forme générale annulaire est divisé en plusieurs secteurs (52/1 à 52/N) de préférence de même extension azimutale, qui sont chacun reliés mécaniquement et de manière thermoconductrice au dissipateur thermique (17) par l'intermédiaire d'au moins un tube échangeur de chaleur (50/1 à 50/N) et sont maintenus en appui de grande surface avec le support de capteur (16) par effet de ressort.

**11.** Ensemble capteur selon l'une des revendications 8 à 10, **caractérisé en ce que** l'ensemble tube échangeur de chaleur, exception faite d'une étroite fente (56) qui s'étend parallèlement à l'axe central (19), est réalisé sous la forme d'un tube échangeur de chaleur (54) en forme d'enveloppe cylindrique qui est pressé contre la surface d'enveloppe cylindrique extérieure du support de capteur au moyen d'au moins un élément de serrage soumis à une précontrainte centripète.

**12.** Ensemble capteur selon l'une des revendications 1 à 11, **caractérisé en ce que** la couche thermoconductrice (73) disposée entre l'élément capteur (13) et l'objet à surveiller est reliée thermiquement au support de capteur (16).

**13.** Ensemble capteur selon la revendication 12, **caractérisé en ce que** l'ensemble tube échangeur de chaleur est constitué de deux tubes échangeurs de chaleur (74/l et 74/r) qui sont soudés d'un côté à la couche thermoconductrice (73).

Fig.1

18/1

19

18/2

17

29

$T_U$

IIc          IIc

16    11

26

36

$T_S$

34

**Fig.2a**

18/1        18/2

17

$T_N$

37

36

$T_U$    39    38    41

$T_S$

11

**Fig.2b**

Fig.2c

Fig.3a

57

50

IIc                    IIc

52

53

12

**Fig.3b**

53

50          52

53/N          12

52/N          52/3

50/N          50/3

53/1          53/3

50/1          50/2

52/1     53/2     50/2

**Fig.3c**

Fig.3d

Fig.4a

Fig.4b

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4169387 A
- DE 102004027747 A1
- DE 102006052241 A1
- FR 2749651 A1
- DE 101006052241 A1